# EUROPEAN PATENT SPECIFICATION

(11) **EP 4 588 717 B1**
(45) Date of publication and mention of the grant of the patent: **08.07.2026**
(21) Application number: 24461510.0
(22) Date of filing: 16.01.2024
(51) Int. Cl.: B60N 2/841, B60N 2/856, B60N 2/865, B60N 2/874

(54) **SEAT HEADREST**
KOPFSTÜTZE FÜR SITZE
APPUI-TÊTE DE SIÈGE

(43) Date of publication of application: 23.07.2025
(73) Proprietor: B/E Aerospace, Inc., Winston Salem, NC 27105 (US)
(72) Inventor: KOLODZIEJCZAK, Marcin Szymon, 51-317 Wroclaw (PL); CHODYNIECKI, Marcin Adam, 51-317 Wroclaw (PL)
(74) Representative: Dehns

(56) References cited:
- EP-A1- 4 269 171
- KR-B1- 102 060 156

## Description

### TECHNICAL FIELD

The present invention relates to a headrest for a seat such as, but not exclusively, for a seat in a vehicle or aircraft or any other seat where improved access to an area behind the seat may be required.

### BACKGROUND

Seats, particularly in vehicles or in other environments where a user is seated while performing tasks, such as a pilot seat in an aircraft or a helicopter pilot seat, are often provided with a head rest portion extending from the seat back to support the user's head while seated for increased safety and comfort. Some headrests are formed integrally with the seat back. Others may be mounted permanently or removably to the seat and may be adjustable in height or angle to accommodate users of different sizes. Document KR102060156B1 discloses a seat headrest comprising a headrest frame.

Whilst such headrests are desirable in terms of comfort and safety, there may be situations where the headrest obstructs the user's access to an area behind the seat. In a helicopter, for example, there is often a shelf or storage area behind a seat, or, in aircraft or other environments, the user may need to access controls, lights, accessories or other things from the area behind the seat without actually moving to the area behind the seat. Because of the task that the user is performing, or because of space constraints or for other reasons, the user may need to access the area behind the seat by just reaching back behind the seat from a seated position or from a position at the front of the seat. The headrest may, however, obstruct the access to the area behind the seat.

There is a need for a headrest design that improves access to an area behind a seat from an area at the front of the seat.

### SUMMARY

According to the invention, there is provided a headrest a headrest frame having:
a lower frame part configured to be attached to a seat back; an upper frame part pivotally attached to the lower frame part to be moveable between a fully open position and a folded position; a pivot arm connected at a first end to the upper frame part and pivotally connected at a second end to the lower frame part; and a locking mechanism to releasably lock the upper frame part relative to the lower frame part in the fully open position; wherein the locking mechanism comprises a shaft extending through the pivot arm and the lower frame part to define a pivot axis about which the pivot arm pivots relative to the lower frame part, and wherein the locking mechanism further comprises a locking pin configured to extend through the lower frame part, the pivot arm and the upper frame part to lock the pivot arm and upper frame part with respect to the lower frame part when the upper frame part is in a first, fully open, position relative to the lower frame part, and wherein actuation of the locking mechanism by a pushing action of a user causes movement of the locking pin out of engagement with the pivot arm and the upper frame part to permit pivotal movement of the arm relative to the lower frame part about the pivot axis.

The shaft and the locking pin of the locking mechanism may be connected to move together, e.g. by a common plate.

The locking mechanism may comprise a push button, for actuation by the user, the push button mounted to the shaft and the locking mechanism being spring-loaded to extend through the lower frame part, the pivot arm and the upper frame part to lock the pivot arm and upper frame part with respect to the lower frame part .

Also provided is a seat to which such a headrest is mounted e.g. a helicopter seat.

### BRIEF DESCRIPTION

Figure 1 shows an example of a seat to which a headrest according to this disclosure is mounted.
Figure 2 shows a headrest according to the invention.
Figure 3A shows a headrest according to this disclosure in a first position.
Figure 3B shows a headrest according to this disclosure in a second position.
Figure 4 shows structure of a headrest according to the invention in the first position.
Figure 5 shows structure of a headrest according to the invention in the second position.
Figure 6 shows a detail of a locking feature for a headrest according to this invention.
Figure 7 shows a detail of an arm of a headrest according to this invention.
Figure 8 is an example of a headrest according to the disclosure, viewed from a side.

### DETAILED DESCRIPTION.

Examples of the headrest according to the invention will now be described with reference to the drawings. It should be noted that these are examples only and that variations are possible within the scope of the claims.

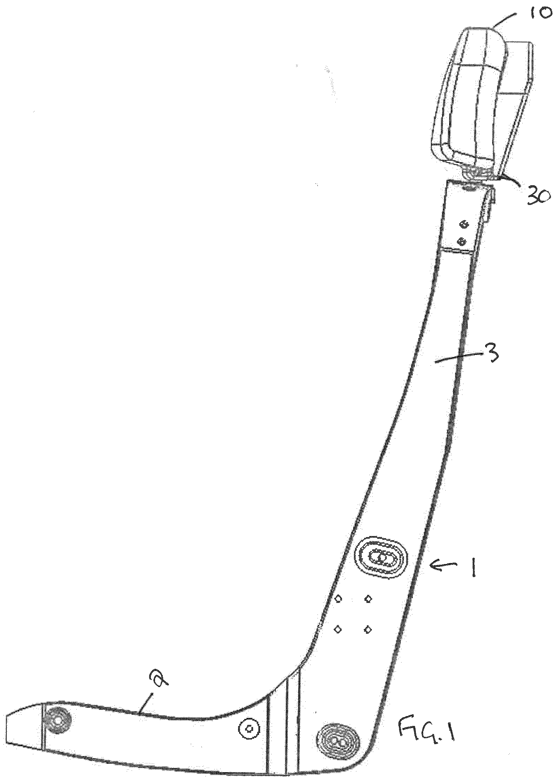

Figure 1 shows an example of a seat 1 to which the headrest 10 of the invention can be mounted. The seat shown in the example is the type of seat that may be fitted in a helicopter or other aircraft or vehicle, but the headrest can be used with any type of seat in any environment.

The seat has a seat base or seat pan 2 and a seat back 3. The seat may, in other examples, also be provided with one or two arm rests. The seat may be adjustable in position and/or height and/or angle and/or the seat base and the seat back may be adjustable in position, angle, height, relative to each other as is known for seats.

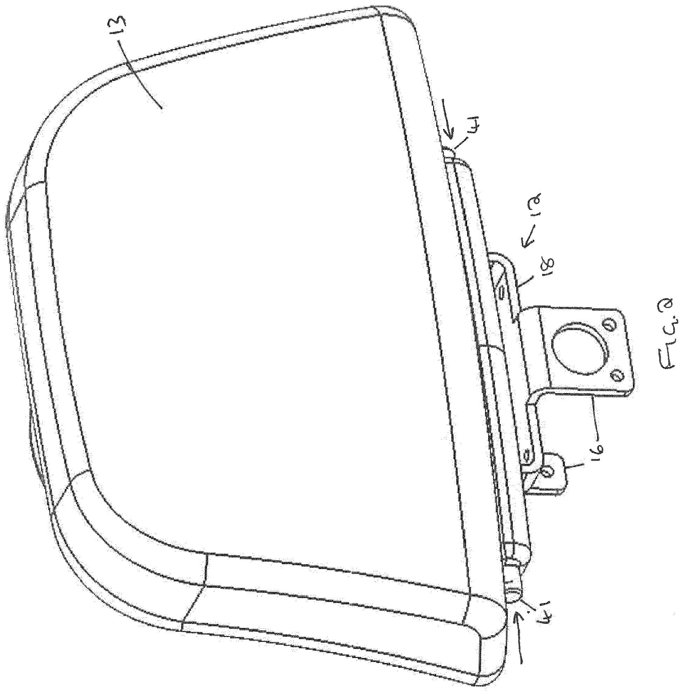

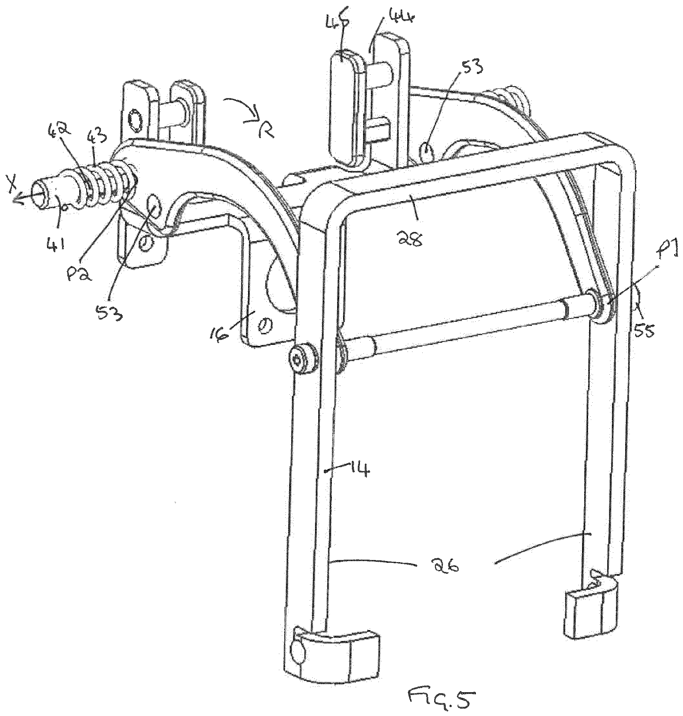

The headrest 10 is mounted to the top 30 of the seat back 3 as will be described further below. This is positioned to provided support for the back of a user's head when they are seated in the seat. Typically, headrests are formed either integrally with the seat back or are a separate part that can be fitted to the top of the seat back e.g. by insertion of legs extending from the headrest into slots or holes in the seatback dimensioned to receive the legs. A headrest typically has a frame to define the shape and structure of the headrest and some form of cushioning or padding over or around the frame to provide comfort. Similar to typical headrests, the headrest of this disclosure has a frame 11 (see Fig. 5) and, for use, cushioning 13 (see Fig. 2) of some sort would be provided around or on the frame. The cushioning can be of any type suitable for fitting around or onto the frame and may or may not be removable for repair, replacement or cleaning, etc.

The frame 11 comprises a first, lower frame part 12 comprising attachment parts for attachment to the seatback 3. The attachment parts may include legs 16 or rods or other extensions, connected to each other via a strut 18, the legs 16 being arranged to attach to the seat back e.g. by fitting over the top of the seat back and being attached by fastening means such as bolts or screws. The frame also comprises a second, upper frame part 14 pivotally attached to the lower frame part. The upper frame part 14 defines the part of the headrest to which the cushioning 13 may be mounted and against which the user's head will rest and so should be of a suitable shape to perform this function. In the example shown, the upper frame part is of a generally rectangular shape having two side arms 26 connected by an uppermost strut 28 defining the top of the frame. An additional reinforcement panel 29 may also be provided across the two arms 26. This panel may be a sheet of metal or plastic and can, to reduce the amount of material and, therefore cost and weight, have a lattice or perforated structure. In this example, the upper frame part 14 is pivotally attached to the lower frame part 12 at the two arms 26. Other frame shapes and structures, and attachments to the lower frame part, are also possible.

The frame 11 is also provided with a locking/unlocking mechanism 40 to selectively unlock the upper frame part relative to the lower frame part to permit relative pivotal movement and lock the upper frame relative to the lower frame preventing pivotal movement.

The locking/unlocking mechanism 40 is configured to be operated by a user to release locking to allow the upper frame part to be pivoted or rotated relative to the lower frame part if, for example, the user needs to fold down the upper frame part to be able to easily access the area behind the headrest. In one example, the locking/unlocking mechanism is configured such that it locks the upper frame part in a fully opened position - i.e. in the normal headrest position for supporting the head.

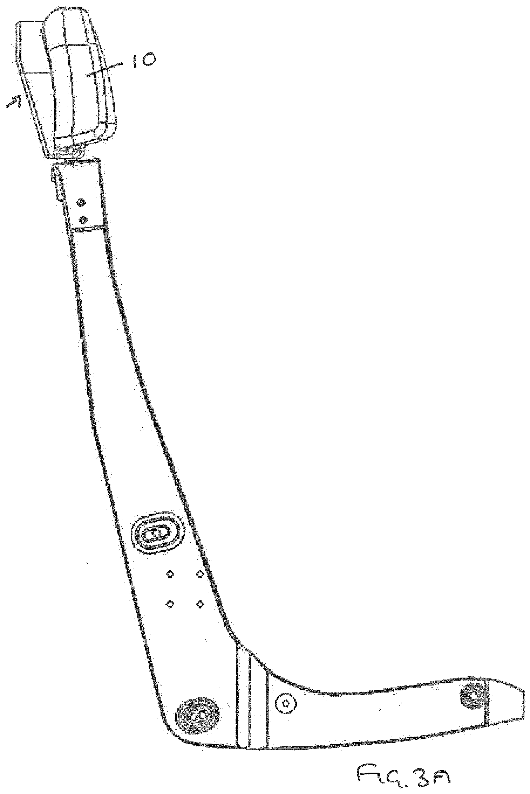

The default position of the headrest is with the upper frame part 14 fully open relative to the lower frame part 1 (such as shown in Fig. 3A) and, in this position, the locking mechanism 40 is in a locked position, to be described further below.

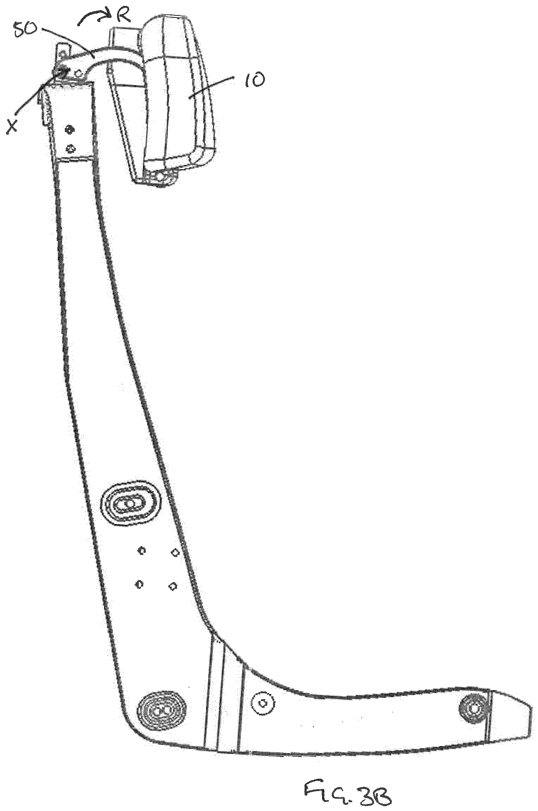

The headrest according to this invention is configured to be folded or pivoted relative to the seat back by the user releasing the locking mechanism 40 by pressing two spring-loaded buttons 42, one on each side of the headrest in the region where the upper frame part is pivotally attached to the lower frame part. The headrest can then be pivoted or folded, by the user, about the top of the seat back to a position in front of the seat back as shown in Fig. 3B. By folding the head rest out of the area above the top of the seat back, the user has better access to the area behind the seat.

The headrest rotates between the fully open position and the folded position about a pivot axis X defined by the locking mechanism 40.

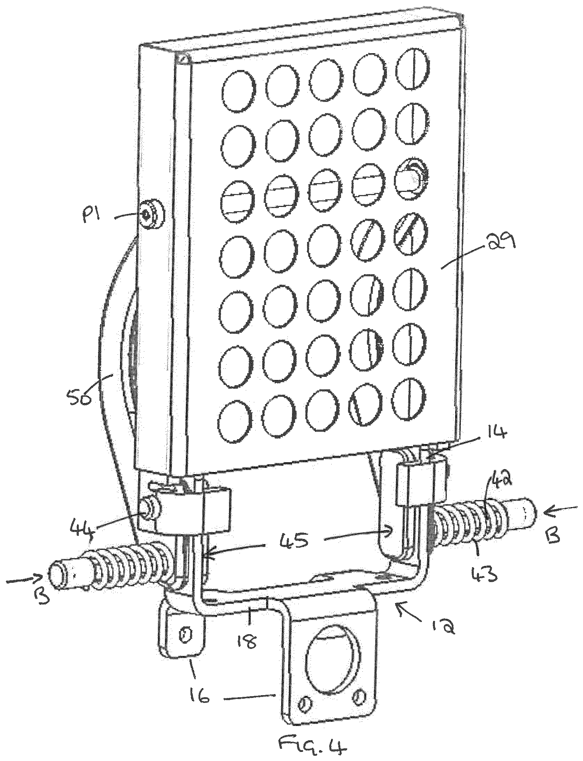

The mechanism that allows the headrest to be moved between the fully open position and the folded position will now be described in more detail with particular reference to Figs. 4 to 7.

As best seen in Figs. 4 and 5, the upper frame part 14 is attached, at a first pivot point P1 to a first end 51 of a pivot arm 50, by means of a fastener such as a bolt or a pin 55 that passes through an opening in the upper frame part and a corresponding opening in the first end 51 of the arm 50. The fastening is such that the upper frame part is pivotal relative to the arm 50.

The other end 52 of the pivot arm 50 is attached to the lower frame part 12 at a second pivot point P2, the lower frame part being pivotally attached to the second end of the arm by a shaft 42 of the spring-loaded push button 41. This shaft 42 defines the pivot axis X about which the pivot arm pivots relative to the lower frame part 12.

The movement of the headrest relative to the seat comprises a pivotal movement of the upper frame part about the pivot axis X relative to the lower frame part (which is fixed relative to the seat back) when the locking mechanism is released by the user pushing the push buttons 41, described further below and a further pivotal movement of the upper frame part relative to the pivot arm 50 about the first pivot point P1.

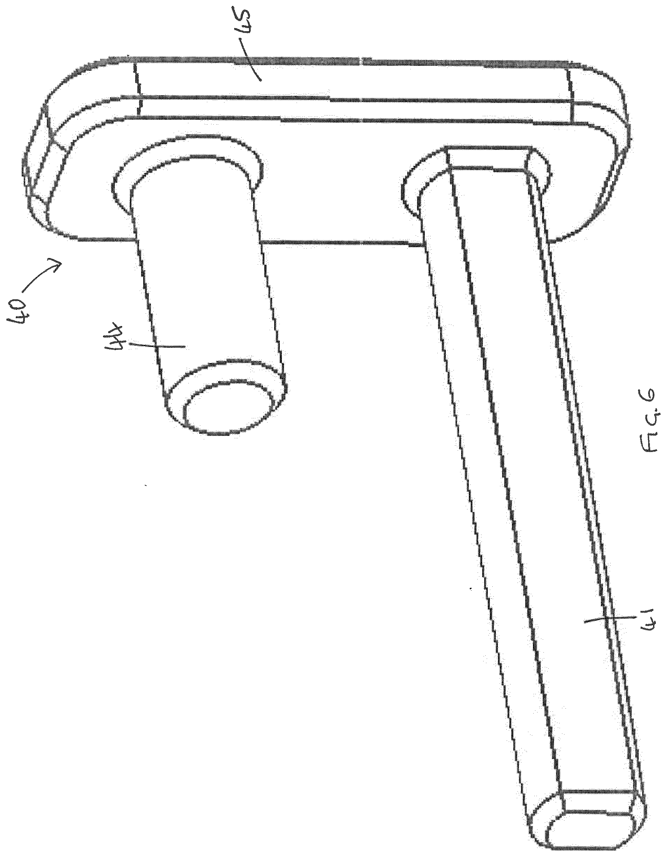

The locking mechanism 40 is provided to lock the upper frame part relative to the lower frame part when the headrest is in the fully open position and when the spring-loaded buttons 41 are in their default state under the force of springs 43, being biased outwards relative to the headrest frame. In this default state of the push buttons, a locking pin 44 of the locking mechanism, which is fixed relative to the push button 41 (e.g., as in this example, by the locking pin 44 and the push button being fixed to a common plate 45 (as shown in Fig. 6). Extends through a hole in the lower frame part and also a locking pin hole 53 in the pivot arm 50 and an aligned hole in the upper frame part. The locking mechanism 40 therefore locks the upper frame part and the lower frame part, as well as the pivot arm sandwiched therebetween at the second pivot point, against relative pivotal movement, shown in Fig. 4. The spring 43 of the locking mechanism therefore biases the locking pin 44 into this locking engagement.

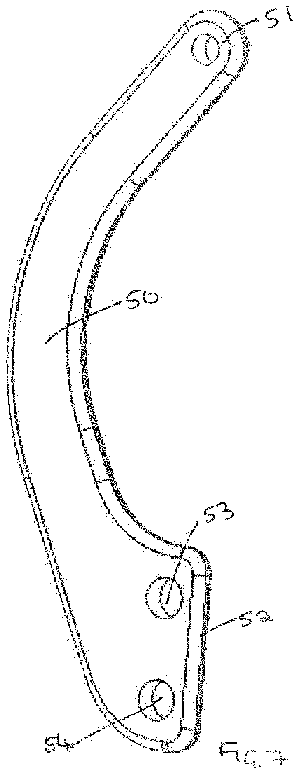

Figures 6 and 7 show the locking mechanism 40 and pivot arm 50 separately for ease of explanation. Figure 6 shows the push button shaft 42 and the locking pin 44 extending from a common plate 45. In use, but not shown in Fig. 6 for simplicity, the button 41 is fitted to the shaft e.g. by a threaded fastening or is otherwise attached to the shaft. The shaft 42 extends from the plate by a greater distance than the locking pin 44 as the shaft carries the push button 41 to be pressed by the user and so this has to extend outwards of the frame structure for access by the user. The locking pin 44 needs to be of sufficient length to extend through the lower frame part, the arm and the upper frame part, when biased by spring 43 into the default locking position, but to be released from engagement with the arm and the upper frame part when a user presses the push button. By pressing the push button (direction B), the user compresses the spring 43, thus forcing the locking mechanism inwards (direction B) to move the locking pin 44 out of engagement with the arm (i.e. out of the hole 53 in the arm 50) and out of engagement with the upper frame part 14.

To fold the headrest to the folded position, the user therefore presses against the push button 41 on either side of the headrest, against the spring bias. Pushing the button, and hence the shaft 42, the locking pin 44, which is connected to the push button e.g. via the common plate 45, is also moved in direction B and therefore out of hole 53 in the pivot arm 50. The engagement between the upper frame part 14 and the pivot arm 50 at the second end 52 of the pivot arm 50 is, therefore, released but the upper frame part remains attached to the pivot arm 50 at the first end 51. Further, the locking engagement between the pivot arm 50 and the lower frame part, through the hole 54 is also released. The pivot arm and the lower frame part are, therefore, now only attached to each other by means of the shaft through the hole 53 defining the pivot axis X and so the pivot arm 50 can pivot relative to the fixed lower frame part 12 about this pivot axis X (defined by the push button shaft (41)). The pivot arm 50 and, therefore, the upper frame part 14, can then be pivoted, by the user, about the pivot axis (direction R in Fig. 5) relative to the seat back to which the lower frame part is fixed, and, at the same time, the upper frame part can pivot relative to the arm at the first pivot point P1 to lie relatively flat relative to the seat back as shown in Figs. 5 and 3B).

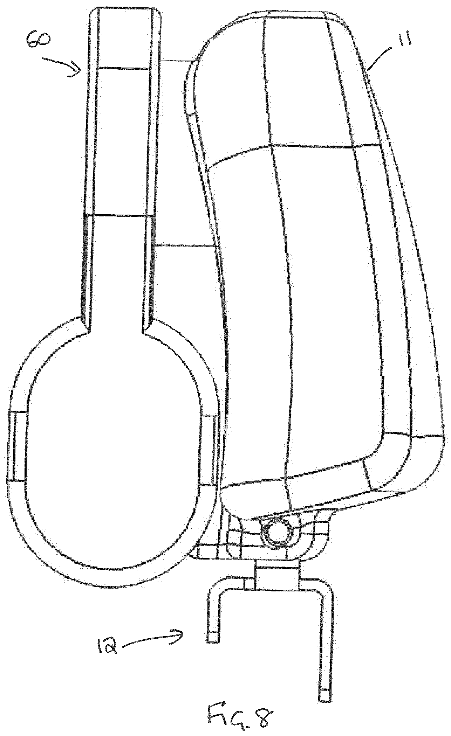

The headrest may be provided with additional features such as a storage feature 60 for a headset or the like as shown in Fig. 8.

The headset design described herein allows a user to easily, and without special tools, fold the headrest to allow access to an area behind the seat. The headrest can be easily mounted to a seat and is simple to assemble and operate. The upper and lower frame parts can be formed of simple, lightweight bent metal to keep costs and weight to a minimum.

## Claims

1. A seat headrest comprising:
a headrest frame (11) having:
a lower frame part (12) configured to be attached to a seat back;
an upper frame part (14) pivotally attached to the lower frame part to be moveable between a fully open position and a folded position;
a pivot arm (50) connected at a first end (51) to the upper frame part and pivotally connected at a second end (52) to the lower frame part; and
a locking mechanism (40) to releasably lock the upper frame part relative to the lower frame part in the fully open position; **characterised in that** the locking mechanism comprises a shaft (42) extending through the pivot arm and the lower frame part to define a pivot axis about which the pivot arm pivots relative to the lower frame part, and wherein the locking mechanism further comprises a locking pin (41) configured to extend through the lower frame part, the pivot arm and the upper frame part to lock the pivot arm and upper frame part with respect to the lower frame part when the upper frame part is in a first, fully open, position relative to the lower frame part, and wherein actuation of the locking mechanism by a pushing action of a user causes movement of the locking pin out of engagement with the pivot arm and the upper frame part to permit pivotal movement of the arm relative to the lower frame part about the pivot axis.

2. The headrest of claim 1, wherein a pivot arm (50) and a locking mechanism (40) are provided on each side of the headset frame.

3. The headrest of claim 1 or 2, wherein the shaft (42) and the locking pin (44) of the locking mechanism (40) are connected to move together.

4. The headrest of claim 3, wherein the shaft and the locking pin are connected by a common plate (45).

5. The headrest of any preceding claim, wherein the locking mechanism comprises a push button, for actuation by the user, the push button mounted to the shaft and the locking mechanism being spring-loaded to extend through the lower frame part, the pivot arm and the upper frame part to lock the pivot arm and upper frame part with respect to the lower frame part.

6. The headrest of any preceding claim, wherein the lower frame part (12) is in the form of a clamp arranged to fit over the top is the seat back, in use.

7. The headrest of any preceding claim, wherein the upper frame part is in the form of a U-shaped bracket having two legs arranged to be attached to the lower frame part via the pivot arm.

8. The headrest of any preceding claim, wherein the pivot arm has a first hole in the first end for pivotal attachment to the upper frame part.

9. The headrest of any preceding claim, wherein the pivot arm has a second hole in the second end through which the shaft passes to define the pivot axis.

10. The headrest of claim 9, wherein the pivot arm has a third hole in the second end, through which the locking pin (44) passes.

11. The headrest of any preceding claim, further comprising a panel (29) across the upper frame part to define a headrest surface.

12. The headrest of any preceding claim, further comprising cushioning fitted over the upper frame part.

13. The headrest of any preceding claim, further comprising a holder to which a headset can be mounted.

14. A seat having a seat base (2) and a seat back (3) and a headrest as claimed in any preceding claim mounted to a top of the seat back.

15. The seat of claim 13, wherein the headrest is removably mounted to the top of the seat back.

## Patentansprüche

1. Kopfstütze für Sitze, umfassend:
einen Kopfstützenrahmen (11), der Folgendes aufweist:
ein unteres Rahmenteil (12), das dazu konfiguriert ist, an einer Sitzlehne befestigt zu sein;
ein oberes Rahmenteil (14), das schwenkbar am unteren Rahmenteil befestigt ist, um zwischen einer vollständig geöffneten Position und einer zusammengeklappten Position bewegbar zu sein;
einen Schwenkarm (50), der an einem ersten Ende (51) mit dem oberen Rahmenteil und an einem zweiten Ende (52) schwenkbar mit dem unteren Rahmenteil verbunden ist; und
einen Verriegelungsmechanismus (40) zum lösbaren Verriegeln des oberen Rahmenteils relativ zum unteren Rahmenteil in der vollständig geöffneten Position; **dadurch gekennzeichnet, dass** der Verriegelungsmechanismus einen Schaft (42) umfasst, der sich durch den Schwenkarm und das untere Rahmenteil erstreckt, um eine Schwenkachse zu definieren, um die der Schwenkarm relativ zum unteren Rahmenteil schwenkt, und wobei der Verriegelungsmechanismus ferner einen Verriegelungsstift (41) umfasst, der dazu konfiguriert ist, sich durch das untere Rahmenteil, den Schwenkarm und das obere Rahmenteil zu erstrecken, um den Schwenkarm und das obere Rahmenteil in Bezug auf das untere Rahmenteil zu verriegeln, wenn sich das obere Rahmenteil in einer ersten, vollständig geöffneten Position relativ zum unteren Rahmenteil befindet, und wobei eine Betätigung des Verriegelungsmechanismus durch eine Drückwirkung eines Benutzers eine Bewegung des Verriegelungsstifts aus dem Eingriff mit dem Schwenkarm und dem oberen Rahmenteil bewirkt, um eine Schwenkbewegung des Arms relativ zum unteren Rahmenteil um die Schwenkachse zu ermöglichen.

2. Kopfstütze nach Anspruch 1, wobei auf jeder Seite des Kopfstützenrahmens ein Schwenkarm (50) und ein Verriegelungsmechanismus (40) bereitgestellt sind.

3. Kopfstütze nach Anspruch 1 oder 2, wobei der Schaft (42) und der Verriegelungsstift (44) des Verriegelungsmechanismus (40) verbunden sind, um sich gemeinsam zu bewegen.

4. Kopfstütze nach Anspruch 3, wobei der Schaft und der Verriegelungsstift durch eine gemeinsame Platte (45) verbunden sind.

5. Kopfstütze nach einem der vorhergehenden Ansprüche, wobei der Verriegelungsmechanismus einen Druckknopf zur Betätigung durch den Benutzer umfasst, wobei der Druckknopf am Schaft montiert ist und der Verriegelungsmechanismus federbelastet ist, um sich durch das untere Rahmenteil, den Schwenkarm und das obere Rahmenteil zu erstrecken, um den Schwenkarm und das obere Rahmenteil in Bezug auf das untere Rahmenteil zu verriegeln.

6. Kopfstütze nach einem der vorhergehenden Ansprüche, wobei das untere Rahmenteil (12) die Form einer Klammer hat, die so angeordnet ist, dass sie im Gebrauch über die Oberseite der Sitzlehne passt.

7. Kopfstütze nach einem der vorhergehenden Ansprüche, wobei das obere Rahmenteil die Form eines U-förmigen Bügels hat, der zwei Schenkel aufweist, die so angeordnet sind, dass sie über den Schwenkarm am unteren Rahmenteil befestigt sind.

8. Kopfstütze nach einem der vorhergehenden Ansprüche, wobei der Schwenkarm ein erstes Loch im ersten Ende zur schwenkbaren Befestigung am oberen Rahmenteil aufweist.

9. Kopfstütze nach einem der vorhergehenden Ansprüche, wobei der Schwenkarm ein zweites Loch im zweiten Ende aufweist, durch das die Welle verläuft, um die Schwenkachse zu definieren.

10. Kopfstütze nach Anspruch 9, wobei der Schwenkarm ein drittes Loch im zweiten Ende aufweist, durch das der Verriegelungsstift (44) verläuft.

11. Kopfstütze nach einem der vorhergehenden Ansprüche, ferner umfassend eine Tafel (29) quer über das obere Rahmenteil, um eine Kopfstützenfläche zu definieren.

12. Kopfstütze nach einem der vorhergehenden Ansprüche, ferner umfassend eine über das obere Rahmenteil passend angebrachte Polsterung.

13. Kopfstütze nach einem der vorhergehenden Ansprüche, ferner umfassend einen Halter, an dem ein Headset montiert werden kann.

14. Sitz, der eine Sitzfläche (2) und eine Rückenlehne (3) und eine Kopfstütze nach einem der vorhergehenden Ansprüche aufweist, die an einer Oberseite der Rückenlehne montiert ist.

15. Sitz nach Anspruch 13, wobei die Kopfstütze abnehmbar an der Oberseite der Rückenlehne montiert ist.

## Revendications

1. Appui-tête de siège comprenant :
un cadre d'appui-tête (11) ayant :
une partie de cadre inférieure (12) configurée pour être fixée à un dossier de siège ;
une partie de cadre supérieure (14) fixée de manière pivotante à la partie de cadre inférieure pour pouvoir être mobile entre une position entièrement ouverte et une position pliée ;
un bras de pivot (50) relié au niveau d'une première extrémité (51) à la partie de cadre supérieure et relié de manière pivotante au niveau d'une seconde extrémité (52) à la partie de cadre inférieure ; et
un mécanisme de verrouillage (40) permettant de verrouiller de manière libérable la partie de cadre supérieure par rapport à la partie de cadre inférieure dans la position complètement ouverte ; **caractérisé en ce que** le mécanisme de verrouillage comprend un arbre (42) s'étendant à travers le bras de pivot et la partie de cadre inférieure pour définir un axe de pivot autour duquel le bras de pivot pivote par rapport à la partie de cadre inférieure, et dans lequel le mécanisme de verrouillage comprend en outre une goupille de verrouillage (41) configurée pour s'étendre à travers la partie de cadre inférieure, le bras de pivot et la partie de cadre supérieure afin de verrouiller le bras de pivot et la partie de cadre supérieure par rapport à la partie de cadre inférieure lorsque la partie de cadre supérieure est dans une première position, complètement ouverte, par rapport à la partie de cadre inférieure, et dans lequel l'actionnement du mécanisme de verrouillage par une action de poussée de l'utilisateur entraîne un mouvement de la goupille de verrouillage hors de la mise en prise du bras de pivot et de la partie de cadre supérieure pour permettre un mouvement de pivotement du bras par rapport à la partie de cadre inférieure autour de l'axe de pivot.

2. Appui-tête selon la revendication 1, dans lequel un bras de pivot (50) et un mécanisme de verrouillage (40) sont fournis de chaque côté du cadre de casque d'écoute.

3. Appui-tête selon la revendication 1 ou 2, dans lequel l'arbre (42) et la goupille de verrouillage (44) du mécanisme de verrouillage (40) sont reliés pour un mouvement conjoint.

4. Appui-tête selon la revendication 3, dans lequel l'arbre et la goupille de verrouillage sont reliés par une plaque commune (45).

5. Appui-tête selon une quelconque revendication précédente, dans lequel le mécanisme de verrouillage comprend un bouton-poussoir, pour actionnement par l'utilisateur, le bouton-poussoir étant monté sur l'arbre et le mécanisme de verrouillage étant chargé par ressort pour s'étendre à travers la partie de cadre inférieure, le bras de pivot et la partie de cadre supérieure afin de verrouiller le bras de pivot et la partie de cadre supérieure par rapport à la partie de cadre inférieure.

6. Appui-tête selon une quelconque revendication précédente, dans lequel la partie de cadre inférieure (12) est sous la forme d'une pince agencée pour s'ajuster au-dessus du sommet du dossier de siège, en utilisation.

7. Appui-tête selon une quelconque revendication précédente, dans lequel la partie de cadre supérieure est sous la forme d'un étrier en forme de U ayant deux pattes agencées pour être fixées à la partie de cadre inférieure par l'intermédiaire du bras de pivot.

8. Appui-tête selon une quelconque revendication précédente, dans lequel le bras de pivot a un premier trou dans la première extrémité pour la fixation pivotante à la partie de cadre supérieure.

9. Appui-tête selon une quelconque revendication précédente, dans lequel le bras de pivot a un deuxième trou dans la seconde extrémité à travers lequel passe l'arbre pour définir l'axe de pivot.

10. Appui-tête selon la revendication 9, dans lequel le bras de pivot a un troisième trou dans la seconde extrémité, à travers lequel passe la goupille de verrouillage (44).

11. Appui-tête selon une quelconque revendication précédente, comprenant en outre un panneau (29) à travers la partie de cadre supérieure pour définir une surface d'appui-tête.

12. Appui-tête selon une quelconque revendication précédente, comprenant en outre un rembourrage ajusté au-dessus de la partie de cadre supérieure.

13. Appui-tête selon une quelconque revendication précédente, comprenant en outre un support sur lequel un casque d'écoute peut être monté.

14. Siège ayant une base de siège (2) et un dossier de siège (3) et un appui-tête selon une quelconque revendication précédente monté sur un sommet du dossier de siège.

15. Siège selon la revendication 13, dans lequel l'appui-tête est monté de manière libérable sur le sommet du dossier de siège.
